(19) Europäisches Patentamt
European Patent Office
Office européen des brevets

(11) Publication number: **0 436 493 A2**

(12) **EUROPEAN PATENT APPLICATION**

(21) Application number: **91100096.6**

(22) Date of filing: **02.01.91**

(51) Int. Cl.⁵: **B09B 3/00, A62D 3/00, C12S 1/00**

(30) Priority: **02.01.90 CS 1/90**

(43) Date of publication of application:
**10.07.91 Bulletin 91/28**

(84) Designated Contracting States:
**AT BE DE FR IT LU NL**

(71) Applicant: **RASELINOVE ZAVODY statny podnik, Mileticova 23 824 56 Bratislava (CS)**

(72) Inventor: **Tarr, Julius CSc., Nádrazná 13 Orechová Poton (CS)**
Inventor: **Lehocky, Ján, RNDr. Stropkovská 3 Bratislava (CS)**
Inventor: **Hrivnák, Ján Astrová 46 Bratislava (CS)**
Inventor: **Santa, Michal Ovrucská 11, 832 02 Bratislava (CS)**

(74) Representative: **Patentanwälte Beetz sen. - Beetz jun. Timpe - Siegfried - Schmitt-Fumian-Mayr Steinsdorfstrasse 10 W-8000 München 22 (DE)**

(54) **Method and composition for biological degradation of oil pollution.**

(57)    The invention relates to a method and a composition for the biological degradation of oil pollution in solid substrates, such as soil, earth, solid waste deposits, etc.. It is characterized in that a fertilizer composition is applied to the substrate in situ which preferably comprises a mixture of the following composition :

(A) ≧ 10 mass-% of an organicfertilizer,

(B) ≧ 10 mass-% of a natural substance improving the structure and physical properties of the mixture,

(C) ≦ 5 mass-% of a multicomponent fertilizer,

(D) ≦ 5 mass-% of a fertilizer comprising trace elements, and

(E) ≦ 2 mass-% of an ammonium or ammine salt, and eventually

(F) ≦ 10 mass-% of one or more mineral admixtures, and eventually

(G) ≦ 5 mass-% of biocompost,

(H) the remainder of up to 100 mass-% consisting of biologically active waste sludge containing oil substances and/or waste from the exploitation and processing of oil and products thereof.

The composition is capable of effectively degrading oil substances in original environment. Apart from the degradation of oil substances, it simultaneously improves the soil properties and optimizes the contents of organic matter and mineral nutrients.

EP 0 436 493 A2

# METHOD AND COMPOSITION FOR BIOLOGICAL DEGRADATION OF OIL POLLUTION

The invention relates to a method and a composition for the biological degradation of oil pollution in soil and solid waste deposits, which are particularly suitable for eliminating oil from oil calamities in situ, particularly mineral oil, crude oil, etc..

It is well-known that due to various present human and industrial activities, ever more soil, earth and wastes are contaminated with crude oil substances. Such a pollution of agricultural or forest soil is frequently caused by failures of oil pipe lines or vehicles for transporting the respective materials. Apart from this, great amounts of polluted earth are left after cleaning railway embankments. Sources of contamination are also e.g. earth containing oil sludges from industrial sedimentation tanks as well as steel converter sludge, rolling mills, etc.

The problems of soil pollution are solved at present by removing and depositing the polluted soil, or by purifying and recultivating it. Alternatively, the calamity effects may be mitigated or remedied on the spot by a professional reclaming intervention (WO 88/02285, EP 0255354, EP 0251562).

For accelerating the degradation of oil substances there are used both liquid and solid admixtures such as agents prepared by a composting technology, or microbial concentrates (e.g. produced in Hungary) which, after being applied to aerobically treated soil, are capable to eliminate the oil pollution within about one year.

It is the object of the present invention to provide a method and a composition for the biological degradation of oil, particularly in situ, which allow a fast elimination of an oil pollution, specifically in soil, earth and solid waste deposits.

The above object is achieved according to the claims.

The invention is based on the finding that oil pollution in soil and solid waste deposits etc., can preferably be biologically degraded by use of a specific fertilizer mixture which is especially suitable for eliminating oil resulting from crude oil calamities wherein oil substances and products thereof have polluted the environment, the composition acting, according to the present invention, in situ.

The method of the present invention for the biological degradation of oil pollution in solid substrates, such as soil, earth, solid waste deposits, etc., is characterized in that a fertilizer composition is applied to the substrate in situ which comprises a mixture having the following composition :

(A) an organic fertilizer,

(B) a natural substance improving the structure and physical properties of the mixture,

(C) a multicomponent fertilizer,

(D) a fertilizer comprising trace elements, and

(E) an ammonium or ammine salt, and eventually

(F) one or more mineral admixtures, and eventually

(G) biocompost, and

(H) biologically active waste sludge containing oil substances and/or waste from the exploitation and processing of oil and products thereof.

According to a preferred embodiment of the method of the present invention a fertilizer composition is applied to the substrate in situ which comprises a mixture having the following composition :

(A) $\geq$ 10 mass-% of the organic fertilizer,

(B) $\geq$ 10 mass-% of the natural substance improving the structure and physical properties of the mixture,

(C) $\leq$ 5 mass-% of the multicomponent fertilizer,

(D) $\leq$ 5 mass-% of the fertilizer comprising trace elements, and

(E) $\leq$ 2 mass-% of the ammonium or ammine salt, and eventually

(F) $\leq$ 10 mass-% of the mineral admixture(s), and eventually

(G) $\leq$ 5 mass-% of biocompost,

(H) the remainder of up to 100 mass-% consisting of biologically active waste sludge containing oil substances and/or waste from the exploitation and processing of oil and products thereof.

The composition of the present invention for the biological degradation of oil pollution in solid substrates, such as soil, earth, solid waste deposits, in situ is characterized in that it comprises a mixture having the following composition :

(A) an organic fertilizer,

(B) a natural substance improving the structure and physical properties of the mixture,

(C) a multicomponent fertilizer,

(D) a fertilizer comprising trace elements, and

(E) an ammonium or ammine salt, and eventually

(F) one or more mineral admixtures, and eventually

(G) biocompost, and

(H) biologically active waste sludge containing oil substances and/or waste from the exploitation and processing of oil and products thereof.

A preferred embodiment of the composition of the present invention is characterized in that it comprises a mixture having the following composition :

(A) ≧ 10 mass-% of the organic fertilizer,

(B) ≧ 10 mass-% of the natural substance improving the structure and physical properties of the mixture,

(C) ≦ 5 mass-% of the multicomponent fertilizer,

(D) ≦ 5 mass-% of the fertilizer comprising trace elements, and

(E) ≦ 2 mass-% of the ammonium or ammine salt, and eventually

(F) ≦ 10 mass-% of the mineral admixture(s), and eventually

(G) ≦ 5 mass-% of biocompost,

(H) the remainder of up to 100 mass-% consisting of biologically active waste sludge containing oil substances and/or waste from the exploitation and processing of oil and products thereof.

The remainder H of up to 100 weight parts comprises biologically active waste sludge containing oil substances and/or waste from the exploitation and processing of oil and products thereof, preferably enriched with biologically active natural flora.

As organic fertilizer A there can be used, for example, composted or fresh stable manure, or dung, or mixtures thereof, minor separate solids of excrements from large scale breeding of horned cattle, poultry or the like, preferably having a dry matter content of 15 to 30 mass-%.

As natural substances B improving the structure and physical properties of the mixture there can be used, for example, peat, collected scrap chips, wood shavings, chippings or the like, preferably having a dry matter content of 50 to 80 mass-%.

As multicomponent fertilizer C there can be used, for example, granulated commercial products such as e.g. CERERIT, NPK, etc.

As fertilizer D comprising trace elements (microelements) there can be used commercial products, such as, for example, MICROLA, as well as other special fertilizers with trace element contents.

Component E is preferably ammonium sulfate, a copper tetraammine salt (copper tetraammine salt), or the like.

As biocompost G there can be used, for example, municipal and industrial wastes, waste collected for specific purposes, etc..

The following example illustrates the invention.

Example

Composition of the invention comprising :

(mass-%)

| | | |
|---|---|---|
| (A) | Organic fertilizer | 25 |
| (B) | peat | 26 |
| (C) | granulated multicomponent fertilizer (GVH) | 3.1 |
| (D) | liquid fertilizer with trace elements (MICROLA) | 0.6 |
| (E) | ammonium sulfate | 1.3 |
| (H) | biologically active sludge from waste water deoilers | 44. |

The composition containing 0.37 % N, 0.38 % P and 0.21 % K as main nutrients in the organic fertilizer, was prepared by mixing the components together, and was applied, after one month of stabilization, to a soil specimen of 1 $m^2$ area in an amount of 5 kg. To simulate oil calamity effects, the specimen was first uniformly contaminated with 10 l of spent oil and thoroughly turned under. To ascertain the composition effects, a reference soil specimen was prepared in the same way as well as a reference specimen of the composition to compare the values of the basal soil respiration. The three specimens were monitored within the time period between July 18, and October 8, 1989, and turned up every fortnight. The dynamics of the degradation of the oil substances were monitored on six samples taken within the above mentioned period. As main indices of degradation dynamics there were selected the content of crude oil substances in the soil and simultaneously the basal respiration thereof which were monitored also with regard to the temperature conditions during the experiment.

The taken samples were analyzed by means of IR-spectrometry (Perkin Elmer 598).

The results of analyses of the individual six samples taken during the experiment as well as the basal soil respiration values are listed off in the following table.

| Sample taking date | Reference sample of composit. dry matter % | Oil substance contents in compos. mg/kg | Reference sample of soil after calamity dry matter % | Oil substance contents in soil reference sample mg/kg | Soil sample with composition dry matter % | Oil substance in soil with composition mg/kg | Basal respiration mg CO2/100 g in 24 hrs. | | |
|---|---|---|---|---|---|---|---|---|---|
| | | | | | | | Composit. | Reference sample of soil after calamity | Soil sample with compos. after calamity |
| 18 07 89 | 56.2 | 9821 | 82.2 | 37345 | 79.3 | 34960 | 4.3429 | 5.0840 | 17.5542 |
| 12 08 89 | 63.92 | 7336 | 81.9 | 30453 | 77.7 | 23421 | 0.6426 | 0.1219 | 0.6801 |
| 04 09 89 | 59.74 | 7232 | 79.0 | 28011 | 77.1 | 14393 | 0.5685 | 0.8688 | 3.6704 |
| 13 09 89 | 62.1 | 5448 | 83.3 | 26955 | 79.4 | 9475 | 0.7684 | 1.7417 | 5.3669 |
| 20 09 89 | 62.1 | 5103 | 84.0 | 24735 | 80.7 | 9284 | 0.7214 | 0.8647 | 0.8833 |
| 08 10 89 | 62.6 | 4337 | 78.0 | 22082 | 74.9 | 8777 | 1.1925 | 0.8107 | 0.6625 |

EP 0 436 493 A2

The composition is capable of effectively degrading oil substances in original environment. Apart from the degradation of oil substances, it simultaneously improves the soil properties and optimizes the contents of organic matter and mineral nutrients.

## Claims

1. A method for the biological degradation of oil pollution in solid substrates, such as soil, earth, solid waste deposits, etc.,
   **characterized** in that
   a fertilizer composition is applied to the substrate in situ which comprises :
   (A) an organic fertilizer,
   (B) a natural substance improving the structure and physical properties of the mixture,
   (C) a multicomponent fertilizer,
   (D) a fertilizer comprising trace elements, and
   (E) an ammonium or ammine salt, and eventually
   (F) one or more mineral admixtures, and eventually
   (G) biocompost, and
   (H) biologically active waste sludge containing oil substances and/or waste from the exploitation and processing of oil and products thereof.

2. The method according to claim 1, characterized in that a fertilizer composition is applied to the substrate in situ which comprises :
   (A) $\geq$ 10 mass-% of the organic fertilizer,
   (B) $\geq$ 10 mass-% of the natural substance improving the structure and physical properties of the mixture,
   (C) $\leq$ 5 mass-% of the multicomponent fertilizer,
   (D) $\leq$ 5 mass-% of the fertilizer comprising trace elements, and
   (E) $\leq$ 2 mass-% of the ammonium or ammine salt, and eventually
   (F) $\leq$ 10 mass-% of the mineral admixture(s), and eventually
   (G) $\leq$ 5 mass-% of biocompost,
   (H) the remainder of up to 100 mass-% consisting of biologically active waste sludge containing oil substances and/or waste from the exploitation and processing of oil and products thereof.

3. The method of claim 1 or 2, characterized in that a composition is used component H of which is enriched with biologically active natural flora.

4. The method of claim 1 or 2, characterized in that a composition is used comprising composted or fresh stable manure or dung as organic fertilizer A and/or comprising peat, sawdust, shavings and/or chippings as natural substance B.

5. The method of one of claims 1 to 4, characterized in that a composition is used comprising ammonium sulfate and/or a copper tetraammine salt as ammonium or ammine salt E, respectively.

6. Composition for the biological degradation of oil pollution in solid substrates, such as soil, earth, solid waste deposits, etc., in situ, characterized in that it comprises a mixture having the following composition :
   (A) an organic fertilizer,
   (B) a natural substance improving the structure and physical properties of the mixture,
   (C) a multicomponent fertilizer,
   (D) a fertilizer comprising trace elements, and
   (E) an ammonium or ammine salt, and eventually
   (F) one or more mineral admixtures, and eventually
   (G) biocompost, and
   (H) biologically active waste sludge containing oil substances and/or waste from the exploitation and processing of oil and products thereof.

7. Composition according to claim 6, characterized in that it comprises a mixture having the following composition :

(A) ≧ 10 mass-% of the organic-fertilizer,

(B) ≧ 10 mass-% of the natural substance improving the structure and physical properties of the mixture,

(C) ≦ 5 mass-% of the multicomponent fertilizer,

(D) ≦ 5 mass-% of the fertilizer comprising trace elements, and

(E) ≦ 2 mass-% of the ammonium or ammine salt, and eventually

(F) ≦ 10 mass-% of the mineral admixture(s), and eventually

(G) ≦ 5 mass-% of biocompost,

(H) the remainder of up to 100 mass-% consisting of biologically active waste sludge containing oil substances and/or waste from the exploitation and processing of oil and products thereof.

8. The composition of claim 6 or 7, characterized in that component H is enriched with biological active natural flora.

9. The composition of one of claims 6 to 8, characterized in that the organic fertilizer A consists of or comprises composted or fresh stable manure or dung, and/or the natural substance B consists of or comprises peat, sawdust, shavings and/or chippings.

10. The composition of one of claims 6 to 9, characterized in that component E consists of or comprises ammonium sulfate and/or a copper tetraammine salt.